# EUROPEAN PATENT SPECIFICATION

(11) **EP 1 487 210 B1**
(45) Date of publication and mention of the grant of the patent: **19.10.2011**
(21) Application number: 04013882.8
(22) Date of filing: 14.06.2004
(51) Int. Cl.: H04N 7/14

(54) **Image data processing method of mobile communication terminal**
Bilddatenverarbeitungsverfahren eines Mobilfunkendgerätes
Procédé de traitement de données d'image d'un terminal de télécommunication mobile

(30) Priority: 14.06.2003 KR 2003038544
(43) Date of publication of application: 15.12.2004
(73) Proprietor: LG Electronics, Inc., Seoul 150-721 (KR)
(72) Inventor: Ryu, Hae Jeong, Seoul (KR)
(74) Representative: Katérle, Axel

(56) References cited:
- US-A- 5 611 038
- US-B2- 6 538 686

## Description

### BACKGROUND OF THE INVENTION

### Field of the Invention

The present invention relates to an image data processing method of a mobile communication terminal and, more particularly, to an image data processing method of a mobile communication terminal capable of converting resolution of an image data according to a state of traffic during a video telephony and transmitting the resolution-converted image data.

### Prior Art

United States Patent 5,611,038 discloses teleconferencing over fixed lines using two modes: a normal mode and an exception mode. In the normal mode, four QCIF slow video sequences may be shown with normal voice quality audio. When the network becomes congested or the or the line becomes noisy, the mode switches from normal mode to then exception mode wherein a single QCIF video with regular voice grade audio is used to conserve bandwidth.
United States Patent 6,538,686 discloses converting the resolution of images to be appropriate to the display capabilities of a destination device.

### Description of the Related Art

Recently, a mobile communication terminal has developed to a multifunctional mobile device that is able to process multimedia data, not a device only for a voice communication. Namely, the mobile communication terminal includes a high performance controller and a signal processor for handling a complex calculation and a large scale memory, and can implement even a camera function.

In general, the camera function-provided mobile communication terminal provides a video telephony service, which can transmit an image and a voice simultaneously at a fixed bearer rate. Accordingly, a user can perform a voice call communication while viewing the other party or an image shot by the other party through the video telephony service.

In general, a maximum resolution of an image obtained through a camera provided in the mobile communication terminal has 'the horizontal pixel number * the vertical pixel number * the color construction number'.

In a related art video telephony service of a mobile communication terminal, an image obtained by the camera is transmitted as a data state having the maximum resolution, so the size of the transmission data is very big. A unit for discriminating a series of images by a temporal construction is fps (frame per second). The higher the fps, the more natural the video of the video telephony.

However, the video telephony service of the mobile communication terminal in the related art, there is a limitation to heighten the fps according to an environment of communications network, and since more data is transmitted as the fps is higher, a possibility of generation of a data loss is accordingly increased.

In other words, in the video telephony service of the related art mobile communication terminal, since the image inputted by the camera is transmitted as it is, if traffic between the mobile communication terminal and a base station is congested, normal set frames are not all properly transmitted but each cut image is transmitted. And since one image itself has a large data quantity, so the transmitted single frame of image is broken.

As mentioned above, since the high capacity image data inputted through the camera is transmitted as it is, a frame may not be transmitted within a certain time according to traffic state of a communication network, failing to provide a natural video.

In addition, when traffic of a communication network is congested, data for a single frame is not normally transmitted, so that the image data is partially lost and a broken image is provided, resulting a problem that reliability for a quality of a corresponding service deteriorates.

### SUMMARY OF THE INVENTION

Therefore, an object of the present invention is to provide an image data processing method of a mobile communication terminal capable of analyzing traffic of a data link layer during a video telephony and automatically converting resolution of image data according to the traffic state.

To achieve at least the above objects in whole or in parts, there is provided an image data processing method of a mobile communication terminal having a camera in a video telephony, including: analyzing traffic in a data link layer; and reducing resolution of an image inputted from a camera with a threshold value previously set according to a state of the traffic and transmitting the resolution-reduced image.

To achieve at least these advantages in whole or in parts, there is further provided an image data processing method of a mobile communication terminal including: pre-setting threshold values of certain stages according to states of traffic; analyzing a current state of traffic by a processing buffer of a second layer of a mobile communication terminal when a video telephony is started; comparing the state of traffic and the threshold value and converting resolution of an image inputted from a camera of the mobile communication terminal; and transmitting the resolution-converted image.

To achieve at least these advantages in whole or in parts, there is further provided an image data processing method of a mobile communication terminal including: pre-setting threshold values of certain stages according to states of traffic; analyzing a current state of traffic by a processing buffer of a second layer of a mobile communication terminal when a video telephony is started; comparing the state of traffic and the threshold value; reducing resolution of an image inputted from a camera of the mobile communication by applying a certain size of window to the image; and transmitting the resolution-reduced image.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements wherein:
Figure 1 is a flow chart of an image data processing method of a mobile communication terminal in accordance with a preferred embodiment of the present invention;
Figure 2 illustrates an image data processing operation of the mobile communication terminal in accordance with the preferred embodiment of the present invention;
Figure 3A shows an image obtained by a camera of the mobile communication terminal;
Figure 3B shows an image obtained by applying a 3x3 pixel of window to Figure 3A; and
Figure 3C shows an image obtained by applying a 5x5 pixel of window to Figure 3A.

### DETAILED DESCRIPTION OF THE PREFERRED EMBODIMENTS

An image data processing method of a mobile communication terminal in accordance with a preferred embodiment of the present invention will now be described with reference to the accompanying drawings.

If resolution of a still image were reduced, a quality of the corresponding image would be extremely lowered. Comparatively, in case of video, broken image, rather than the reduction of resolution, would much more affect the quality of the image.

Especially, in a mobile communication terminal having a display unit that operates relatively slow and has low brightness, resolution reduction of video can be so compensated as to be recognized by a user through continuity of images.

However, in implementing video through the mobile communication terminal, occurrence of a phenomenon that an image is cut off or a portion of an image is broken due to loss of a frame, in spite of the high resolution of video, would result in fatal quality degradation.

Thus, in the image data processing method of a mobile communication terminal in accordance with the present invention, threshold values of various stages are set according to traffic, resolution of an image is changed by comparing traffic with the pre-set threshold values in a video telephony, and then, the resolution-changed image is transmitted, thereby maintaining video without a break.

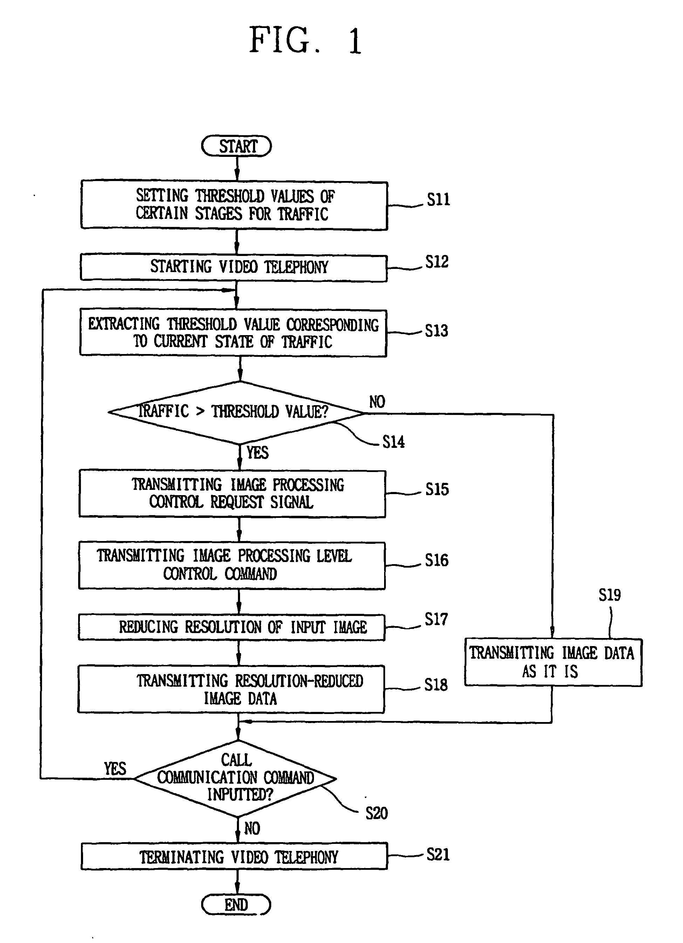

Figure 1 is a flow chart of an image data processing method of a mobile communication terminal in accordance with a preferred embodiment of the present invention.

First, threshold values of certain stages are set according to each traffic between the mobile communication terminal and a network (step S11). The threshold value is a maximum data quantity for transmission at a processing buffer of a data link layer of the mobile communication terminal, and the more the traffic is increased, the smaller each threshold value.

When a user starts a video telephony together with the other party by using the camera-attached mobile communication terminal (step S12), the processing buffer recognizes a current state of traffic, extracts a corresponding threshold value (step S13), and determines whether a state of traffic reaches the pre-set threshold value (step S14).

When the traffic reaches the pre-set threshold value, the processing buffer transmits a request signal requesting for controlling of an image processing level to an upper layer (step S15), and then, the upper layer transmits an image processing level control command to a lower layer of the processing buffer in response to the request signal.

The lower layer changes resolution of an image inputted from the camera of the mobile communication terminal (step S17), and the processing buffer reads and transmits the resolution-changed image (step S18).

In other words, the processing buffer corresponding to the data link layer of the mobile communication terminal transmits the signal requesting for controlling the image processing level to a third layer, and then, the third layer reduces resolution by applying a window having a certain size to the image obtained through the camera.

Various techniques can be used for conversion of resolution, and in the present invention, resolution is changed by using nxn pixel of window. Resolution change by using the window is a simple algorithm, making it possible to calculate at a high speed.

If, however, the traffic does not reach the pre-set threshold value, an image inputted from the camera of the mobile communication terminal is transmitted as it is through the network, without undergoing resolution reduction (step S19).

Thereafter, it is determined whether the video telephony using the mobile communication terminal is terminated (step S20). If a call communication termination command is inputted, the video telephony process is terminated (S21), and if the call communication command is not inputted, the process is repeated until the video telephony is terminated.

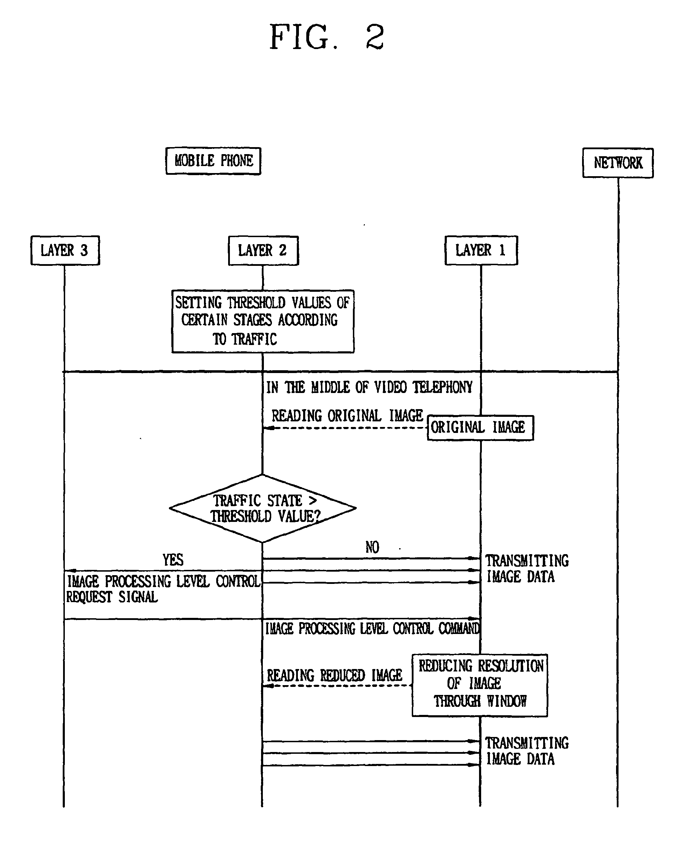

Figure 2 illustrates an image data processing operation of the mobile communication terminal in accordance with the preferred embodiment of the present invention.

Operations of changing resolution of an image according to traffic in a video telephony and transmitting the image will now be described with reference to Figure 2.

A certain stage of threshold value is set according to a state of traffic in the processing buffer of the data link layer of the mobile communication terminal, and a network is connected to the mobile communication terminal for a video telephony.

The processing buffer of the data link layer analyzes the state of traffic to determine whether the state of traffic is not less than the pre-set threshold value. If the state of traffic is not greater than the threshold value, an image inputted through the camera provided in the mobile communication terminal is read as it is from a lower layer and transmitted.

If, however, the state of traffic analyzed in the processing buffer is not less than the threshold value, the data link layer transmits a request signal for controlling of the image processing level to the upper layer.

Upon receiving the request signal, the upper layer transmits the image processing level control command to the lower layer of the data link layer, and then, the lower layer reduces resolution of the image inputted through the camera of the mobile communication terminal and transmits it to the processing buffer of the data link layer.

The resolution reduction is made by applying a window having a certain size to the image inputted through the camera, and nxn pixels constituting each image is expressed as a single pixel.

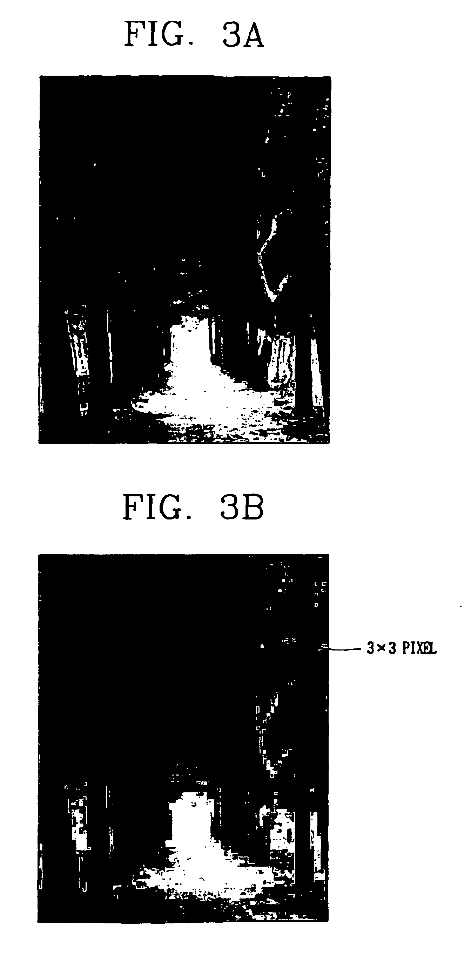

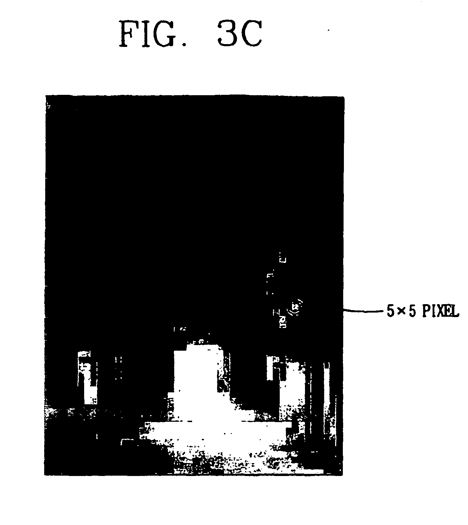

Figure 3A shows an image obtained by a camera of the mobile communication terminal, Figure 3B shows an image obtained by applying a 3x3 pixel of window to Figure 3A, and Figure 3C shows an image obtained by applying a 5x5 pixel of window to Figure 3A.

The image shown in Figure 3A has a distinct picture quality and high resolution. When the resolution of the original image is reduced by applying the 3x3 pixel of window, lines and sides of the image are simplified to result in a degraded quality but their forms are recognizable as shown in Figure 3B.

When the 3x3 pixel of window is applied to an original image with resolution of 120x160, the image can be reduced to have resolution of 40x54, so the data quantity can be reduced to 1/9 of the data quantity of the original image. That is, as many as nine times frames can be transmitted compared to the case of transmitting the original image.

If resolution of the original image is reduced as shown in Figure 3C by applying 5x5 pixel of window, its quality becomes worse than the image of Figure 3B, but its forms can be still recognizable.

Application of the 5x5 pixel of window can reduce 120x160 resolution of the original image to 24x32 resolution of image, so that a data quantity can be reduced to 1/25 of the data quantity of the original image. That is, compared to the case of transmitting the original image as it is, as many as 25 times frames can be transmitted.

In general, if video has about 15fps quality, the user can recognize it as a real time video, but in most cases, 15fps quality can be hardly obtained in an actual video telephony.

Thus, in the image data processing method of a mobile communication terminal in accordance with the present invention, since many more frames can be transmitted with the small data quantity, even if traffic is congested, less broken video can be provided compared to the related art.

As so far described, the image data processing method of a mobile communication terminal in accordance with the present invention has the following advantages.

That is, for example, when traffic of a data link layer exceeds a pre-set threshold value during a video telephony, resolution of an image to be transmitted is reduced to reduce a data quantity, so that natural video without a break can be provided.

In addition, vide is provided by controlling resolution of a transmission image according to a traffic state of a communication network, so that a reliability of a corresponding service quality can be enhanced.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. An image data processing method of a mobile communication terminal having a camera operating in videotelephony comprising:
pre-setting threshold resolution values for different traffic states;
pre-setting window sizes for the pre-set threshold resolution values respectively;
measuring traffic in a channel between the terminal and a network;
comparing the measured traffic to the different traffic states; **characterized by** converting resolution of a terminal image based on one of the pre-set threshold resolution values pre-set for the traffic state nearest the measured traffic; and
conforming the converted resolution image to one of the pre-set window sizes pre-set for the threshold resolution value that corresponds to the traffic state nearest the measured traffic.

2. The method of claim 1, further comprising:
transmitting the converted image through said channel.

3. The method of claim 1, wherein each of the pre-set threshold resolution values is set to a prescribed data transmission quantity for a corresponding one of the different traffic states.

4. The method of claim 3, wherein the prescribed quantity is a maximum data transmission quantity.

5. The method of claim 1, wherein the converted image is transmitted from a processing buffer of the terminal.

6. The method of claim 1, wherein the converting step includes:
converting resolution of the image by a predetermined ratio based on the measured traffic.

7. The method of claim 1, wherein said converting includes converting resolution of the image based on a conversion ratio associated with the closest threshold value.

8. The method of claim 1, wherein the converting step includes:
reducing resolution of the terminal image based on the measured traffic.

9. The method of claim 1, wherein the image is derived from a camera of the terminal and the camera is included in the terminal.

10. The method of claim 1, wherein the measuring step includes:
determining an amount of traffic in a data link layer associated with the channel between the terminal and network.

11. A mobile communication terminal having a camera for a video telephony, comprising:
a memory for storing one or more resolution ratios for a corresponding number of traffic states, and for storing a plurality of window sizes each corresponding to a respective one of the resolution ratios; **characterized by**
a processing buffer which compares a current traffic state on a channel to the traffic states in said memory, and converts resolution of a mobile communication terminal image based on a result of the comparison, said processing buffer further conforming the converted resolution image to the window size pre-set for a nearest one of the resolution ratios that corresponds to the current traffic state.

12. The terminal of claim 11, wherein said memory stores a plurality of resolution ratios for a corresponding number of traffic states.

13. The terminal of claim 11, wherein the current traffic state and the traffic states stored in said memory are data transmission rates.

14. The terminal of claim 11, wherein the processing buffer reduces resolution of the mobile communication terminal image based on a result of the comparison.

## Patentansprüche

1. Bilddatenverarbeitungsverfahren eines mobilen Kommunikationsendgeräts mit einer Kamera, die mit Videotelefonie arbeitet, umfassend:
Voreinstellen von Auflösungsschwellenwerten für verschiedene Verkehrszustände;
Voreinstellen von Fenstergrößen für die voreingestellten Auflösungsschwellenwerte;
Messen des Verkehrs in einem Kanal zwischen dem Endgerät und einem Netz;
Vergleichen des gemessenen Verkehrs mit den verschiedenen Verkehrszuständen;
**gekennzeichnet durch**
Umwandeln der Auflösung eines Endgerätbilds auf Basis eines der voreingestellten Auflösungsschwellenwerte, der für den Verkehrszustand voreingestellt wurde, der dem gemessenen Verkehr am nächsten kommt; und
Anpassen des Bilds mit der umgewandelten Auflösung an eine der voreingestellten Fenstergrößen, die für den Auflösungsschwellenwert voreingestellt wurde, der dem Verkehrszustand entspricht, der dem gemessenen Verkehr am nächsten kommt.

2. Verfahren nach Anspruch 1, ferner aufweisend:
Übertragen des umgewandelten Bilds über den Kanal.

3. Verfahren nach Anspruch 1, bei dem jeder der voreingestellten Auflösungsschwellenwerte auf eine vorgeschriebene Datenübertragungsmenge für einen entsprechenden der verschiedenen Verkehrszustände eingestellt ist.

4. Verfahren nach Anspruch 3, bei dem die vorgeschriebene Menge eine maximale Menge für die Datenübertragung ist.

5. Verfahren nach Anspruch 1, bei dem das umgewandelte Bild von einem Verarbeitungspuffer des Endgeräts übertragen wird.

6. Verfahren nach Anspruch 1, bei dem der Umwandlungsschritt umfasst:
Umwandeln der Auflösung des Bilds in einem vorgegebenen Verhältnis auf Basis des gemessenen Verkehrs.

7. Verfahren nach Anspruch 1, bei dem das Umwandeln das Umwandeln der Auflösung des Bilds auf Basis eines Umwandlungsverhältnisses umfasst, das dem nächstliegenden Schwellenwert zugeordnet ist.

8. Verfahren nach Anspruch 1, bei dem der Umwandlungsschritt umfasst:
Verringern der Auflösung des Endgerätbilds auf Basis des gemessenen Verkehrs.

9. Verfahren nach Anspruch 1, bei dem das Bild von einer Kamera des Endgeräts abgeleitet wird und die Kamera im Endgerät enthalten ist.

10. Verfahren nach Anspruch 1, bei dem der Messschritt umfasst:
Bestimmen einer Verkehrsmenge in einer Datenverbindungsschicht, die dem Kanal zwischen den Endgerät und dem Netz zugeordnet ist.

11. Mobiles Kommunikationsendgerät mit einer Kamera für Videotelefonie, umfassend:
einen Speicher zum Speichern eines oder mehrerer Auflösungsverhältnisse für eine entsprechende Anzahl Verkehrszustände und zum Speichern einer Mehrzahl Fenstergrößen, von denen jede einem entsprechenden Auflösungsverhältnis entspricht;
**gekennzeichnet durch**
einen Verarbeitungspuffer, der einen aktuellen Verkehrzustand auf einem Kanal mit den Verkehrszuständen im Speicher vergleicht und die Auflösung eines Bilds des mobilen Kommunikationsendgeräts auf Basis eines Vergleichsergebnisses umwandelt, wobei der Verarbeitungspuffer ferner das Bild mit der umgewandelten Auflösung an die Fenstergröße anpasst, die für das nächstliegende der Auflösungsverhältnisse voreingestellt wurde, das dem aktuellen Verkehrszustand entspricht.

12. Endgerät nach Anspruch 11, bei dem der Speicher eine Mehrzahl Auflösungsverhältnisse für eine entsprechende Anzahl Verkehrszustände speichert.

13. Endgerät nach Anspruch 11, bei dem der aktuelle Verkehrszustand und die im Speicher gespeicherten Verkehrszustände Datenübertragungsraten sind.

14. Endgerät nach Anspruch 11, bei dem der Verarbeitungspuffer die Auflösung des Bilds des mobilen Kommunikationsendgeräts auf Basis eines Vergleichsergebnisses verringert.

## Revendications

1. Procédé de traitement de données d'image d'un terminal de communication mobile comportant une caméra fonctionnant en visiophonie comprenant :
le préréglage des valeurs de résolution de seuil pour différents états de trafic ;
le préréglage des tailles de fenêtres pour les valeurs de résolution de seuil préétablies respectivement ;
la mesure du trafic dans un canal entre le terminal et un réseau ;
la comparaison du trafic mesuré avec les différents états de trafic ; **caractérisé par**
la conversion de la résolution d'une image de terminal sur la base de l'une parmi les valeurs de résolution de seuil préétablies préétablies pour l'état de trafic le plus proche du trafic mesuré ; et
la conformation de l'image de résolution convertie à l'une parmi les tailles de fenêtres préétablies préétablies pour la valeur de résolution de seuil qui correspond à l'état de trafic le plus proche du trafic mesuré.

2. Procédé selon la revendication 1, comprenant en outre :
la transmission de l'image convertie à travers ledit canal.

3. Procédé selon la revendication 1, dans lequel chacune des valeurs de résolution de seuil préétablies est établie à une quantité de transmission de données prescrite pour l'un correspondant parmi les différents états de trafic.

4. Procédé selon la revendication 3, dans lequel la quantité prescrite est une quantité de transmission de données maximale.

5. Procédé selon la revendication 1, dans lequel l'image convertie est transmise depuis une mémoire tampon de traitement du terminal.

6. Procédé selon la revendication 1, dans lequel l'étape de conversion comprend :
la conversion de la résolution de l'image d'un rapport prédéterminé sur la base du trafic mesuré.

7. Procédé selon la revendication 1, dans lequel ladite conversion comprend la conversion de la résolution de l'image sur la base d'un rapport de conversion associé à la valeur de seuil le plus proche.

8. Procédé selon la revendication 1, dans lequel l'étape de conversion comprend :
la réduction de la résolution de l'image de terminal sur la base du trafic mesuré.

9. Procédé selon la revendication 1, dans lequel l'image est dérivée d'une caméra du terminal et la caméra est contenue dans le terminal.

10. Procédé selon la revendication 1, dans lequel l'étape de mesure comprend :
la détermination d'une quantité de trafic dans la couche liaison de données associée au canal entre le terminal et le réseau.

11. Terminal de communication mobile comportant une caméra pour une visiophonie, comprenant :
une mémoire destinée à mémoriser un ou plusieurs rapports de résolution pour un nombre correspondant d'états de trafic, et destinée à mémoriser une pluralité de tailles de fenêtres chacune correspondant à l'un respectif parmi les rapports de résolution ; **caractérisé par**
une mémoire tampon de traitement qui compare un état de trafic actuel sur un canal aux états de trafic dans ladite mémoire, et convertit la résolution d'une image de terminal de communication mobile sur la base d'un résultat de la comparaison, ladite mémoire tampon de traitement conformant en outre l'image de résolution convertie à la taille de fenêtre préétablie pour le plus proche parmi les rapports de résolution qui correspond à l'état de trafic actuel.

12. Terminal selon la revendication 11, dans lequel ladite mémoire mémorise une pluralité de rapports de résolution pour un nombre correspondant d'états de trafic.

13. Terminal selon la revendication 11, dans lequel l'état de trafic actuel et les états de trafic mémorisés dans ladite mémoire sont des taux de transmission de données.

14. Terminal selon la revendication 11, dans lequel la mémoire tampon de traitement réduit la résolution de l'image de terminal de communication mobile sur la base du résultat de la comparaison.
